# EUROPEAN PATENT SPECIFICATION

(11) **EP 2 281 612 B1**
(45) Date of publication and mention of the grant of the patent: **05.10.2016**
(21) Application number: 09167173.5
(22) Date of filing: 04.08.2009
(51) Int. Cl.: A63B 71/06, G01C 22/00, A63B 69/00

(54) **Apparatus and method for counting exercise repetitions**
Vorrichtung und Verfahren zum Zählen von Übungswiederholungen
Appareil et procédé pour compter les répétitions d'un exercice

(43) Date of publication of application: 09.02.2011
(73) Proprietor: IDT Technology Limited, Kowloon, Hong Kong SAR (CN)
(72) Inventor: Chan, Raymond, Woodland Heights Hong Kong (CN); Leong, Mun Hoong, Repulse Bay Hong Kong (CN); Li, Li, ShenZhen Guangdong (CN)
(74) Representative: Sevinç, Erkan

(56) References cited:
- EP-A1- 1 994 883
- EP-A2- 2 065 680
- US-A1- 2006 236 748
- US-A1- 2007 113 725
- US-B1- 7 246 033

## Description

### FIELD OF INVENTION

This invention relates to an exercise repetition counter and in particular an exercise repetition counter that count the correct number of repetitions irrespective of how the counter is oriented.

### BACKGROUND OF INVENTION

Exercises repetition counters have been frequently used by professional athletes as well as amateurs in sport activities to provide accurate and reliable counting of repetitive actions. Such repetitions counters include pedometers, swim lap counters, weight lifting counters, etc. Traditional pedometers usually utilize a one-dimensional pendulum sensor which requires the user to mount the pedometer on the waist. When the user takes one step, the pendulum sensor increments the step count. However, this kind of pedometer has strict requirement on how it is worn (especially the orientation) on the user and the accuracy is quite limited because the orientation of the pedometer must be strictly kept.

In order to achieve more accurate counting function and less wearing restrictions, exercise repetition counters with more than one sensor have been developed. Examples of such exercise repetition counters are disclosed in U.S. patent number 6,700,499, where a pedometer count the step number in a specified direction selectively from a plurality of sensors. Such specified direction is determined by selecting a reference axis and then the counting is based on the selected reference axis. This type of configuration, however, is not adaptable enough as there are delays in changing to a new reference axis when the orientation of the pedometer is frequently changed in a short period.

Another publication EP 1,813,916 discloses a pedometer containing a three dimensional (3D) accelerometer. The pedometer detects and updates step counts based on an available acceleration signal that is extracted from raw acceleration data with a threshold value. Moreover, the thresholds are updated only based on the amplitude of the waveform as measured by the accelerometer.
EP1994883A1 disclosed a body movement detector which can be used to detect body movement of the user in the vertical direction and also to detect the body-movement pitch of the user as needed.

### SUMMARY OF INVENTION

In the light of the foregoing background, one embodiment of the present invention provides an accurate apparatus and method for counting exercise repetitions even when the user attaches the apparatus in different places and along different orientations on his or her body.

The present invention relates to an apparatus for counting exercise repetitions as defined in claim 1, a method for counting exercise repetitions as defined in claim 9 and a method of identifying a new optional axis for counting exercise repetitions as defied in claim 13.

Furthermore disclosed is an apparatus for counting exercise repetitions including:
1) At least three accelerometers which measures the acceleration profiles of an exerciser simultaneously along at least three directions;
2) a data processing unit which executes an algorithm to add to a repetition count if at least one of the acceleration profiles falls within thresholds;
3) a display means which is connected to said data processing unit; and
4) a memory means which is connected to said data processing unit;
whereby said apparatus is capable of counting said exercise repetitions of said exerciser irrespective of the orientation of said apparatus.

Furthermore disclosed is a method of counting exercise repetitions including the steps of
1) measuring the acceleration of an exerciser along at least three axes simultaneously;
2) comparing the acceleration profile on each axis with thresholds; and
3) adding to a repetition count if at least one of the acceleration profiles falls within at least one of said thresholds.

Further disclosed is a method of identifying optimal axis for counting exercise repetitions including:
1) simultaneously measuring the acceleration of an exerciser along at least three axes;
2) detecting a first valid repetition along a first axis when an acceleration profile on the first axis satisfies a first amplitude threshold range and a cycle threshold range first before other two axes. This axis is referred as the first axis;
3) determining a previous optimal axis that is different from the first axis as a second axis;
4) computing a first amplitude indicator, a first cycle indicator and a first rhythm indicator from the first axis, and a second amplitude threshold, a second cycle threshold range and a rhythm threshold range from the second axis;
5) identifying the first axis as the optimal axis when the first amplitude indicator satisfy the second amplitude threshold; the first cycle indicator is within the second cycle threshold range and the first rhythm indicator is within the rhythm threshold range.

In one embodiment the exercise repetition counter in the present invention is able to detecting the movement along the three axes in the 3D space simultaneously by utilizing three accelerometers. As such no matter how the pedometer is placed, it still can count steps in an accurate and reliable way.

Exemplary embodiment also utilize a counting algorithm that examines a plurality of consecutive steps before deciding whether the orientation of the apparatus has changed, and if a chance is detected, the algorithm will select a different axis. Measuring a plurality of steps for valid step count ensures that the user's irregular movement of the user will not interfere with the counting of the repetition counter..

### BRIEF DESCRIPTION OF FIGURES

Fig. 1 is a front view of an exercise repetition counter according to one embodiment of present invention.
Fig. 2 is a system block diagram of one embodiment of the exercise repetition counter.
Fig. 3 is a simplified flow chart showing the working principle of the exercise repetition counter in one embodiment.
Fig. 4 is a flow chart showing the step occurrence detection procedure in one embodiment.
Fig. 5 is a flow chart showing the Counting-I procedure in one embodiment.
Fig, 6 is a flow chart showing the Counting-II procedure in one embodiment.
Fig. 7 shows a sample waveform diagram of the acceleration data measured by an accelerometer.
Fig. 8 shows an example of the step number increment on one axis.
Fig. 9 shows another example of the step number increment on one axis.

### DETAILED DESCRIPTION OF PREFERRED EMBODIMENT

As used herein and in the claims, "comprising" means including the following elements but not excluding others.

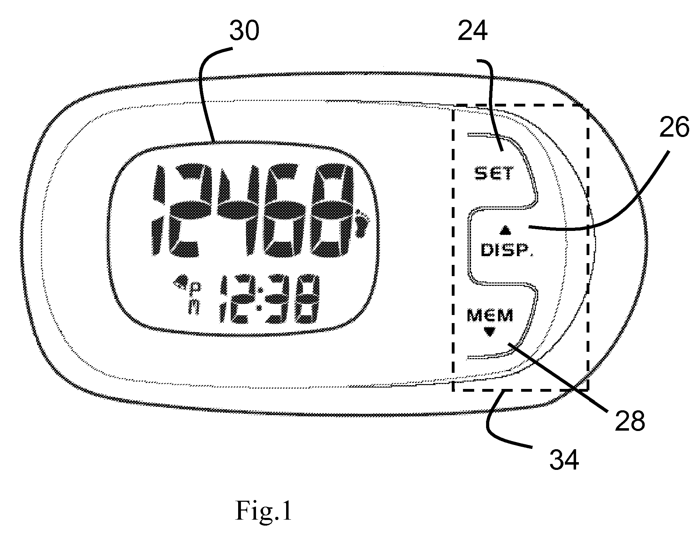

Referring now to Fig. 1, the first embodiment of the present invention is a portable exercise repetition counter that includes a display unit **30** and a setting unit **34.** The setting unit **34** further comprises three buttons as the 'set' button **24,** 'display' button **26** and the 'mem' button **28.** The buttons **24, 26** and **28** enable the user to select appropriate functions and displays on the exercise repetition counter. The display unit **30** displays the repetition count as well as other information such as the current time.

In one embodiment, the portable exercise repetition counter is a pedometer that is worn by an exerciser to count the number of steps he or she walks or runs. In another embodiment, it is an apparatus that a swimmer can attach to the body to count the number of strokes during swimming. In yet another embodiment, it is an event counter that counts the number of exercise event an exerciser accomplishes.

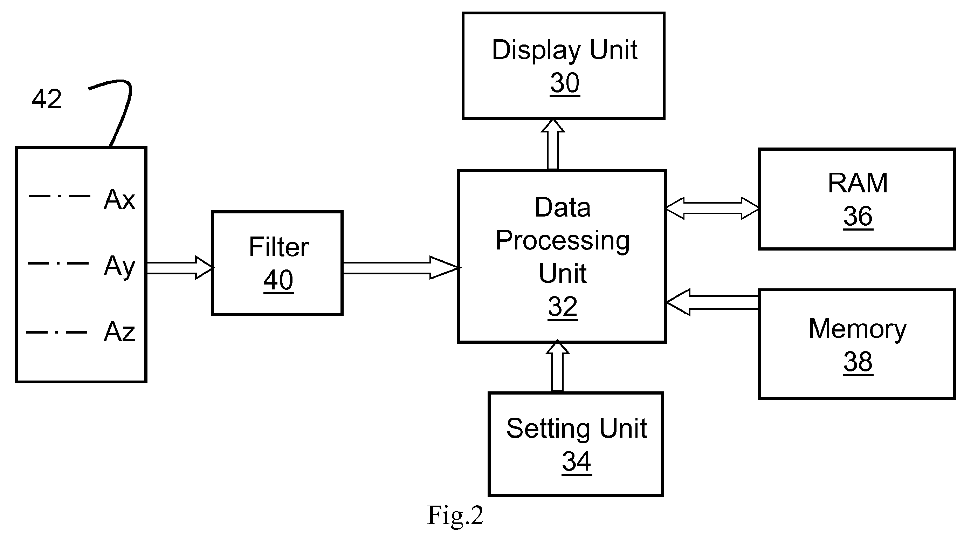

An exemplary embodiment of the exercise repetition counter in the form of a pedometer is used herewith to disclose the invention ideas in the following paragraphs. Referring now to Figures 2, the internal hardware system components of the pedometer include a 3-axes accelerometers **42,** which detect the acceleration signals along the three axes when the exerciser is walking or running. Then the acceleration signal will be smoothed by the filter **40.** The data processing unit **32** processes the three axes filtered acceleration information and calculates the number of the steps the exerciser has taken. The data processing unit outputs the calculated results to the user in the display unit **30** for displaying. The display unit **30** is preferably a Liquid Crystal Display (LCD). The data processing unit **32** is coupled with a setting unit **34** for setting the various parameters such as weight and time. Also, it is coupled with a Random Access Memory (RAM) **36** for a temporary storage of step signals. Moreover, it is connected to a memory **38,** which stores the exercise information of the user (exercise time, calorie, etc).

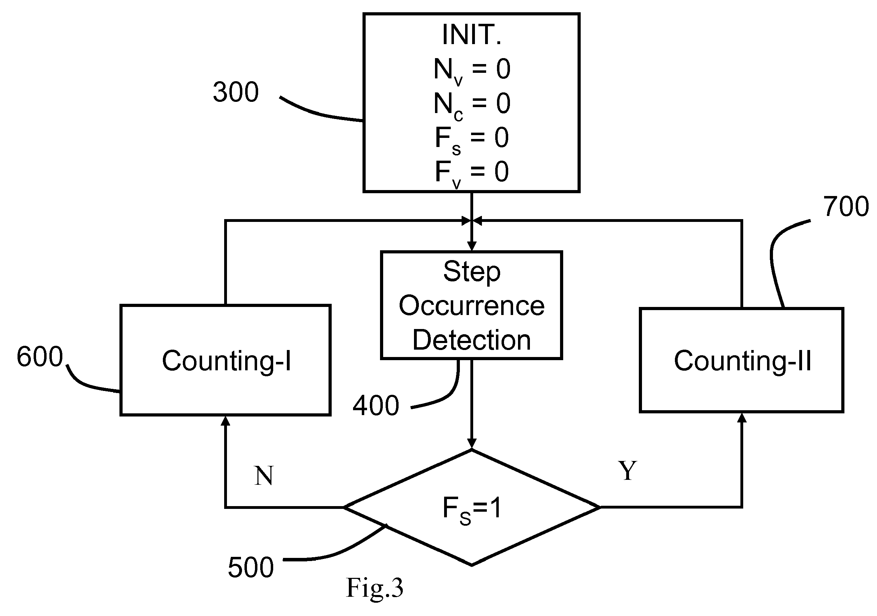

Now turning to the operation of the device described above, Figure 3 shows the overall operation flow of the pedometer in one exemplary embodiment. When the device is initially powered on, the data processing unit **32** starts to execute a software program. It first performs step **300** to reset some of the parameters like the total repetition count Nᵥ, the valid axis flag Fᵥ, the step flag Fₛ and the initial step number N_{c}. Afterwards, it enters into a loop that processes in the acceleration signals from the acceleration sensors. Firstly, it invokes the step occurrence detecting procedure **400** to detect exercise steps based on the sampling of the signal Aₓ, A_{y}, A_{z} and the predetermined cycle threshold and amplitude threshold. In one embodiment, the sample rate is 16Hz. In this procedure, an exercise step is recognized when the acceleration signal A_{c} (A_{c} denotes the current axis. If the current axis is on X-axis, A_{c} is Aₓ; if the current axis in on Y-Axis, A_{c} is A_{y}; if the current axis is on Z-axis, A_{c} is A_{z}.) shows a positive peak higher than the amplitude threshold A_{cthr}, and longer than the cycle T_{cthr}. The threshold A_{cthr} and T_{cthr} are functions of signal envelope such as amplitude and cycle. Afterwards, control is passed to step **500** to check whether a sequence of steps has been recognized. If the number of steps detected along the current-axis has not reached 16 steps, the step flag Fₛ is set to zero (Fₛ = 0), otherwise the step flag Fₛ is set to one (Fₛ = 1).If the step flag Fₛ is zero (Fₛ = 0), control is passed to execute the Counting-I procedure **600,** otherwise it is passed to execute the Counting-II procedure **700.** Then the algorithm proceeds to execute the step occurrence detecting procedure **400** again.

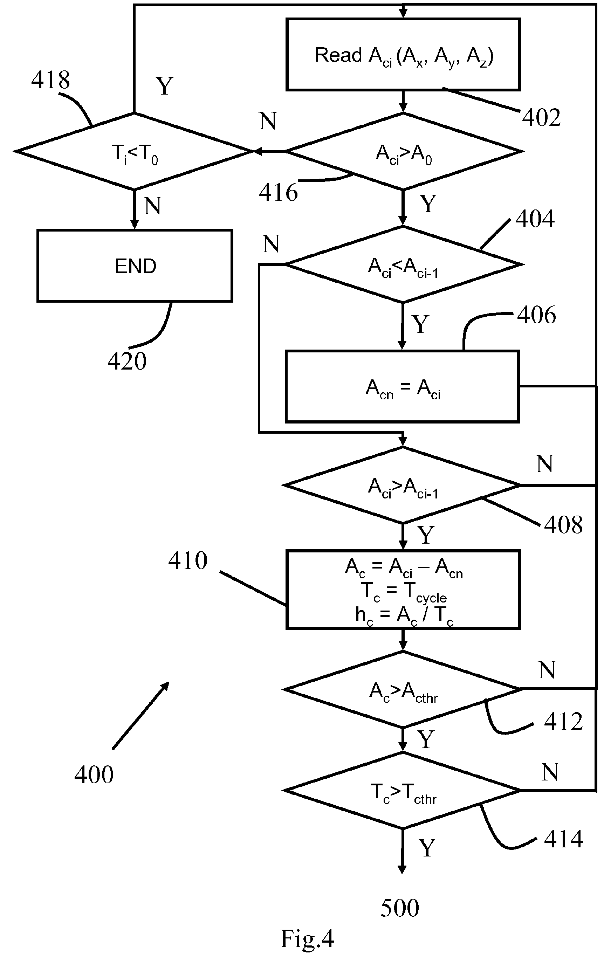

Fig. 4 disclosed in details one exemplary embodiment of the step occurrence detecting procedure **400.** Firstly, in step **402** the filtered acceleration data from the three axes are read. In one embodiment, the three axes are orthogonal with respect to each other. The acceleration data is referred as acceleration profiles which include repetitive waveforms with amplitude movements and acceleration cycles. The character 'c' represents an axis and it could be 'X', 'Y' or 'Z'. The operation steps **402** to **420** are to be repeated three times, each time along one axis with 'c' taking on value 'X', 'Y', 'Z' respectively. (As an example, A_{c} becomes Aₓ the first time; A_{y} the second time and A_{z} the third time.

In step **416,** the algorithm determines if the current amplitude A_{ci} is smaller than a fixed amplitude value A₀. If A_{ci} is smaller than A₀, then the algorithm further determines if the current cycle Tᵢ is small than a fixed cycle value T₀ in step **418.** If so, this normally indicates that there is no motion activity by the exerciser and control is passed to step **420** which is the end of this procedure. In one embodiment, the device enters a sleeping mode in order to save battery energy under this situation.. In this mode, the sampling rate of the device is reduced to 1Hz. The device continuously monitors the difference between A_{ci} and A_{ci-1}. It will 'wake up' and return to normal working status when A_{ci} -A_{ci-1} > A₁ where A₁ is a pre-set threshold, which is in the range of 0.07 to 0.13.

If A_{ci} is larger than A₀, then the current A_{ci} is compared with its previous value A_{ci-1} as shown in steps **404** and **408.** If A_{ci} is smaller than A_{ci-1}, then A_{ci} is descending and A_{cn}, the negative peak of the amplitude movement, takes on the value of A_{ci-1} and control flow goes back to step **402** to read next A_{ci}. When the next A_{ci} is larger than A_{ci-1}, a negative peak value A_{cn} is found and then and the algorithm jumps to step **408.** Step **408** checks if A_{ci} is higher than A_{ci-1}. If so, then A_{ci} is ascending. To ensure that A_{ci} is not equal to the negative peak value A_{cn}, step **408** proceeds to step **410** only when A_{ci} is higher than Acᵢ₋₁ but not equal to it. In block **step,** the amplitude difference between A_{ci} and A_{cn}, which is A_{c}, the current cycle T_{c}, and a ratio h_{c} are computed. The cycle T_{cycle} in step **410** is the time interval of two positive peaks and the positive acceleration peak A_{c} is also referred as a step peak. Then, in steps **412** and **414,** A_{c} and T_{c} are compared with the current amplitude threshold A_{cthr} and current cycle threshold T_{cthr} respectively. If both values are larger than their thresholds, then the algorithm will invoke either the Counting-I procedure **600** or the Counting-II procedure **700,** depending on whether Fₛ is zero or one. Otherwise the algorithm goes back to step **402** to detect another exercise step occurrence. As the three accelerometers are measuring data simultaneously, steps **402** to **420** are executed for each of the 'X', 'Y' and 'Z' axes. The algorithm checks the acceleration profile in each of the axes whether it satisfies the thresholds criteria. As long as one of the acceleration profiles falls within the thresholds, that axis becomes the current axis; i.e. the character 'c' is assign to the label of that axis.

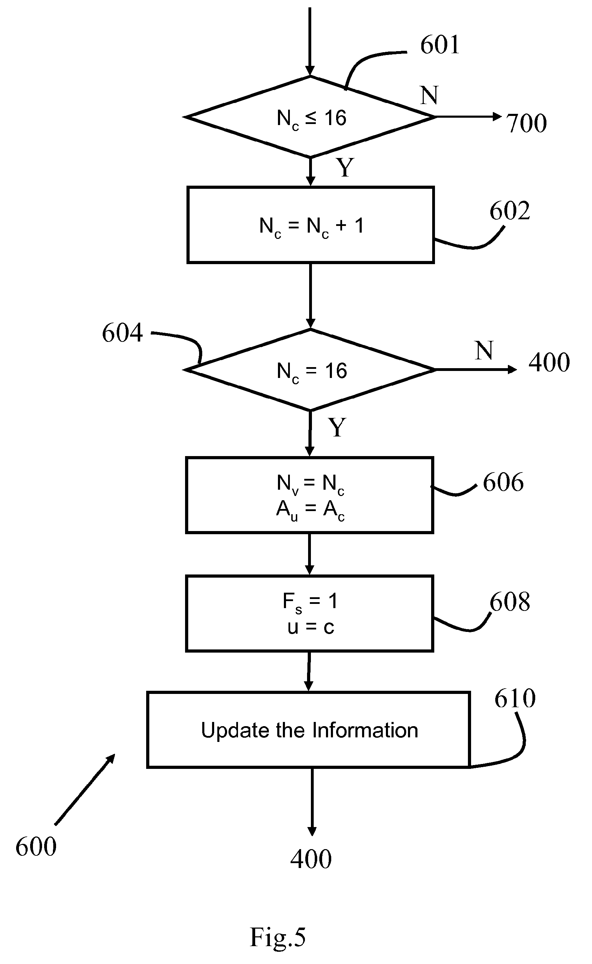

Fig. 5 further explains the detailed operational flow of the Counting-I procedure **600** in one embodiment. In step **601,** if the current step number N_{c} is greater than 16 (N_{c} >16), the procedure will go to step **700,** that is the Counting-II procedure. Otherwise N_{c} is incremented by 1 in step **602.** Then the procedure checks whether N_{c} is equal to 16 in step **604.** If so, control flow goes to step **606.** Otherwise, it returns to the step occurrence detection procedure **400.** Steps **606** and **608** then update the repetition count Nᵥ to be 16, set the valid axis 'u' to the current axis 'c' assign A_{c} to Aᵤ, and set the flag Fₛ to one. Next, the amplitude threshold and the cycle threshold are updated, and the detailed step information such as the cycle and amplitude information of the previous five steps, and the valid cycle and amplitude information of the previous five steps are recorded in step **610.** In one embodiment, the amplitude threshold A_{cthr} and cycle threshold T_{cthr} are computed from the peak values of amplitudes and cycles from a plurality of previous steps. In an alterative embodiment, the A_{cthr} equals to a first coefficient K₁ multiplied by the mean value of amplitudes of previous 5 steps and T_{cthr} equals to another coefficient K₂ multiplied by the mean value of cycles of previous 5 steps. In essence, the Counting-I procedure **600** is to ensure that the activity of the user is a repetitive activity.

In the Counting-I procedure **600,** it is required that the exercise is relatively consistent and consecutive. Then the amplitude threshold A_{cthr} and cycle threshold T_{cthr} are computed based on the last few exercising steps. In an embodiment as mentioned above, sixteen valid steps are required and the last five steps are used in calculating the thresholds.

The exercise counts of the initial 16 steps will not be displayed on the display means to the exerciser but the steps are still saved in the memory means of the device. When the device counts the 17^{th} step and afterward, the correct reading will be displayed, including the initial 16 steps. The number 16 is chosen in this embodiment to balance the effective capturing of the repetitive patterns and the reasonable response time to the user. If there are less than 16 consecutive valid steps, it means that the movements of the user is not repetitive enough and the algorithm continues to look for a next consecutive sequence of 16 valid steps before it formally starts to count the repetition count.

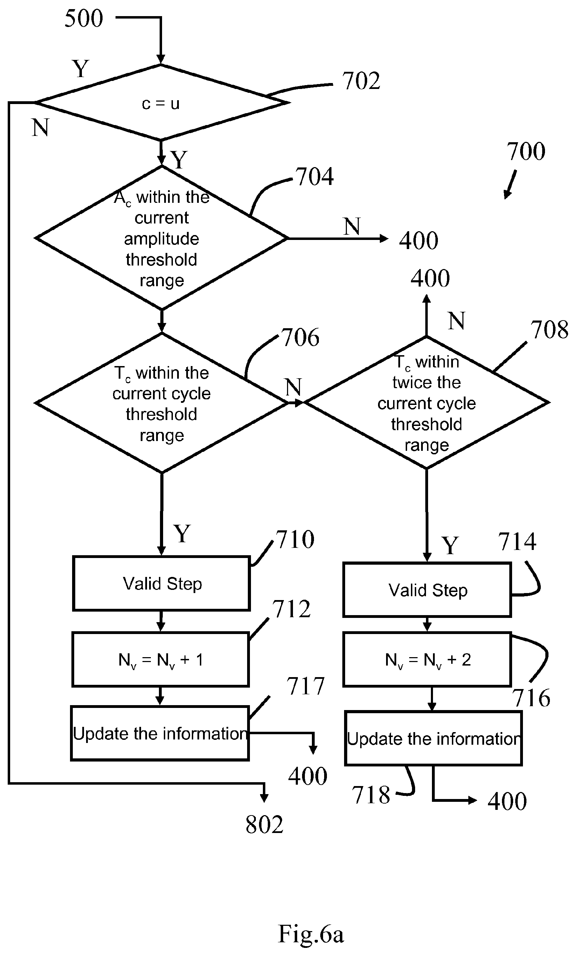

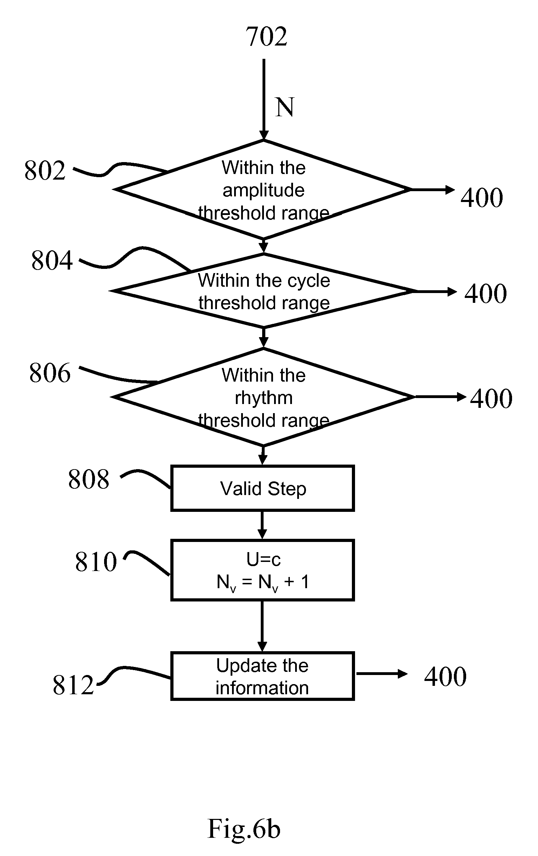

The operation flow of Counting-II procedure **700** in one embodiment is shown in Fig. 6. In explaining this flow chart, we adopt the similar notation as mentioned above that the character 'c' and 'u' are 'variables' that can take on value of 'X', 'Y', or 'Z', representing the three axes in 3D space. Firstly, step **702** checks whether the current axis 'c' is to the same as the valid axis 'u'. If so, the algorithm enters into the step-regulation checking unit which comprises teps **704** and **706.** In detail, step **704** checks if the current amplitude A_{c}: (e.g. Aₓ, A_{y} and A_{z}) is within the amplitude range between Aᵤᵣₕᵣ-a1 and Aᵤₜₕᵣ+a1. Similarly, step **706** checks if the cycle range is between Tᵤₜₕᵣ-b1 and Tᵤₜₕᵣ+b1. (where a1, b1 are constants). If the step-regulation checking unit judges the conditions are satisfied, a valid step is declared in step **710** and the repetition count Nᵥ is incremented by one in step **712.** In the situation that A_{c} falls within the amplitude threshold and T_{c} is longer than one cycle threshold but shorter than twice of the cycle threshold, two valid steps are declared in step **714** and the repetition count Nᵥ will be incremented by two in step **716.** This is because sometimes the algorithm is not able to detect a step peak although the user is making a normal movement and this makes the repetition count incorrect. For example, sometimes the step peaks of two consecutive exercise steps are different, such that the first step has a strong step peak but the next step has a weak step peak. When this happens, it is possible that the weak step peak is not detected. So incrementing Nᵥ by two compensates for the repetition count in this case. Meanwhile, the information of the previous five valid cycles and amplitudes is updated and the information on the current axis is also updated in step **717** and step **718.** If neither of the steps **704, 706** or **708** is satisfied, then control is passed back to step occurrence detection **400** to detect another valid step.

If in step **702,** it is found that the current axis 'c' is not the valid axis 'u', step **802** will be executed. The operation flow starting from step **802** onward to step **812** are designed to enhance the accuracy and reliability of counting a valid step, even when the user is changing his movement style or placing the device in a different orientation. The software implements an algorithm to select an optimal axis in detecting exercising steps. In summary, when the current axis 'c' is different from the valid axis 'u' ('u' is also referred as the previous optimal axis), the software computes various indicators based on the measurements from the previous five steps on the current axis, and check whether they falls within an amplitude threshold range, a cycle threshold range and a rhythm threshold range. When all these conditions are satisfied, then the current axis becomes the valid axis.

A detailed description of how this is done is given here. Firstly, a similar step-regulation checking unit mentioned previously is used to judge whether the current amplitude and cycle falls within the threshold ranges. However, the threshold judgment is different from the previous case. Instead of using amplitude alone, the ratio of amplitude divided by cycle time (i.e. H_{c} = A_{c} / T_{c}) is used. This ratio represents the exercise intensity. The exercise intensity is higher when the ratio is larger. Hence in step **802,** the amplitude values of the previous 5 steps on the current axis are divided by the corresponding cycle times respectively If the mean of the previous 5 ratios exceeds a threshold h₀ (h₀ is the mean of the amplitude ratios of the previous 5 valid steps minus a constant h which is set to 0.2), the step regulation checking unit continues. It then compares the cycle threshold in step **804.** If the mean of the current previous 5 cycles is within the range of the mean of the previous 5 valid cycles, then the rhythm is compared in step **806.** If the rhythm is better, the current step is a valid step. The valid axis becomes the current axis and the step number is incremented. The information such as the valid steps information and the information on the valid axis are updated in step **808, 810** and **812.** Otherwise, it returns to step **400.**

The rhythm is judged using the following steps:
1) Calculate the mean of the previous 5 cycles on the current axis;
2) Calculate the absolute differences between the previous 5 cycle values and the mean of the previous 5 cycles;
3) Calculate the absolute of the difference.
4) Calculate the sum of the previous 5 cycle absolute differences;
5) Repeat steps 1) - 3) for the previous 5 cycles on the valid axis;
6) If the sum of the previous 5 cycle absolute differences on the current axis is less than the sum of the previous 5 cycle absolute differences on the valid axis, then the current step is the valid step and the valid axis is the current axis.
7) Otherwise, it goes back to step occurrence detecting procedure **400.**

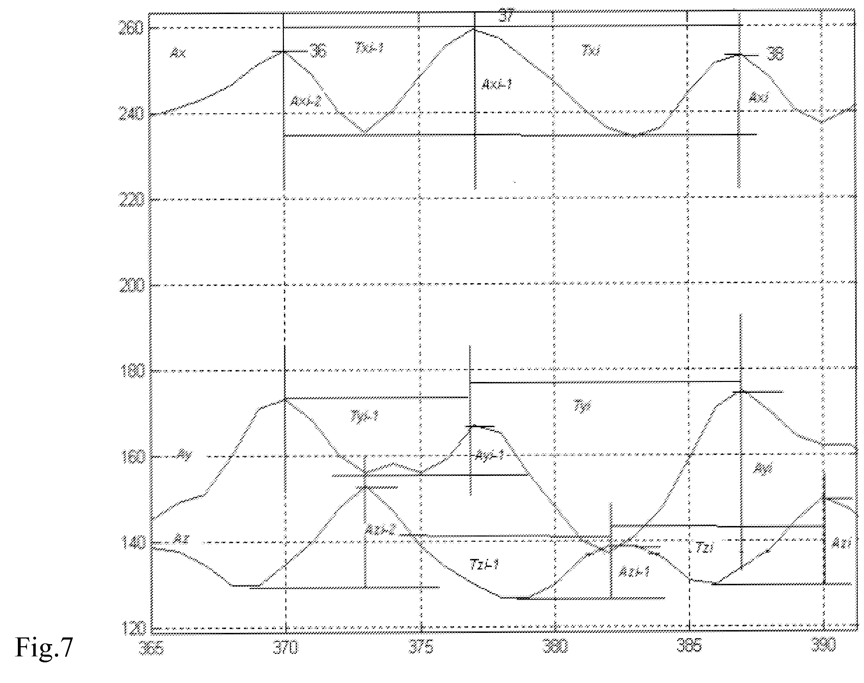

Fig. 7 gives a graph illustrating the amplitude and cycle in an example. The cycle T_{c} is the time interval between two positive peak points. The amplitude A_{c} is the difference between the positive peak value and the negative peak value.

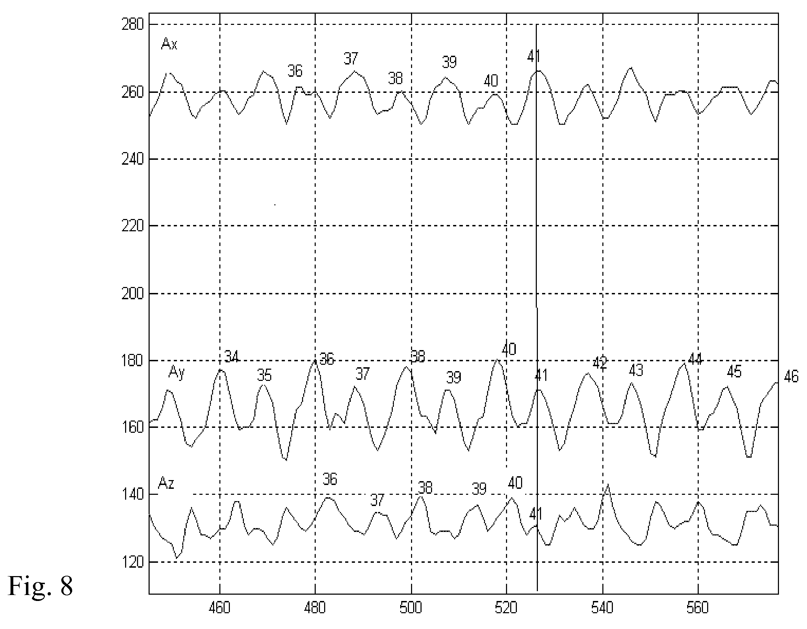

Fig 8 gives a detailed illustration for step number increment when changing the axis. When the 41^{st} exercise step is calculated, it is the Z-axis that first detects an exercise step according to the step occurrence detecting procedure **400.** However, the valid axis is Y-axis. The previous 5 valid amplitudes on the Y-axis are found to be 11, 9, 11, 8 and 11. The corresponding valid cycles are 12, 14, 15, 13 and 13. The previous five valid amplitude ratios are therefore 0.92, 0.64, 0.73, 0.62, and 0.85. The mean of the valid amplitude ratios is 0.75. The mean of the valid cycles is 13.4. The previous 5 amplitudes on Z-axis are found to be 9, 19, 12, 17 and 10 and the corresponding cycles on Z-axis are 10, 13, 10, 9, and 13. The previous 5 amplitude ratios on Z-axis are 0.9, 1.46, 1.20, 1.89 and 0.77. The mean of the amplitude ratios on Z-axis is 1.24. Since this is greater than the mean of the valid amplitude ratio 0.75 minus a constant h₀ which is set to 0.2, the current step amplitude passes the amplitude threshold test of step **802.** The algorithm proceeds to step **804.** Here the criteria is that the mean cycle of the current axis must not deviate to that of the valid axis by three (i.e. b1 is set to 3). From the data, the mean of current cycle (the Z axis) is 11 while the mean of the valid axis (the Y axis) is 13.4. Since 11 is less than (13.4 + 3) but greater than (13.4 - 3), it also passes the cycle threshold test of step **804.** Next, the algorithm checks the rhythm in step **806.** The absolute values of the valid cycle differences are 1.4, 0.6, 1.6, 0.4, and 0.4. The sum of the absolute valid cycle differences is 4.4. The absolute values of the cycle difference on Z-axis are 1, 2, 1, 2, and 2. The sum of the differences is 8.0. Since 8.0 is greater than 4.4, it fails the test and therefore, the current step is not a valid step. Next, the step occurrence detecting procedure **400** detects an exercise step in the Y-axis. The Counting-II procedure **700** is entered again. Since both the current axis and the valid axis are the Y-axis, it satisfies the condition test of step **702.** The current amplitude and cycle are found to be 9 and 13 respectively. The new previous 5 valid amplitudes and cycles are 9, 11, 8, 11 and 9 and the cycles are 14, 15, 13, 13 and 13. It satisfies both the amplitude threshold test **704** and cycle threshold test **706.** So the current step as detected in the Y-axis is the valid 41^{st} step and also the Y-axis remains to be the valid axis.

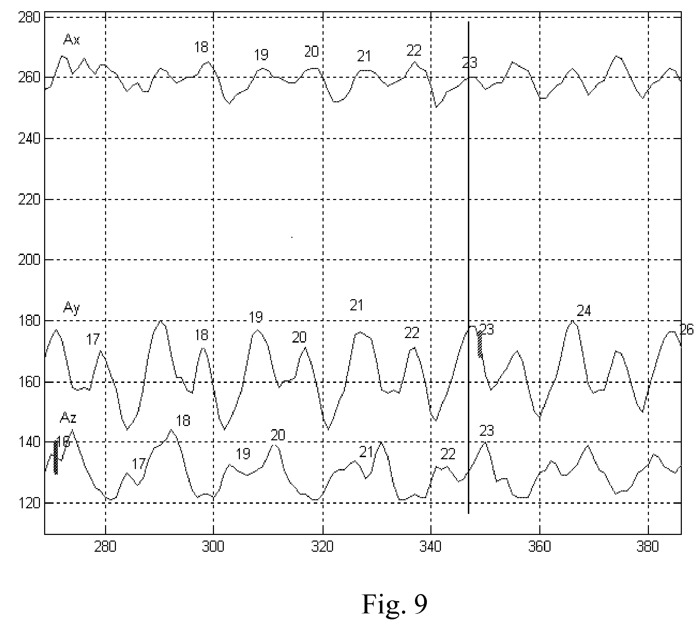

Fig. 9 gives another detailed illustration on how the optimal axis is selected. First of all, at the onset of the 23rd step, the step occurrence detecting procedure **400** detects an exercise step on Y-axis. But the current valid axis is the Z-axis. The previous 5 amplitudes on Y-axis are 8, 10, 9, 10 and 10; and the cycles are 16, 16, 14, 16, and 16. The previous 5 amplitude ratios on Y-axis are 0.50, 0.63, 0.64, 0.63, and 0.63. Their mean is 0.60. At this time, the previous 5 valid amplitudes are 8, 14, 8, 11 and 8 and the cycles are 15, 15, 14, 17, and 17. The previous valid amplitude ratios are 0.53, 0.93, 0.57, 0.65, and 0.73. The mean is 0.68. Since the mean amplitude ration on the Y-axis 0.60 is greater than the mean of the valid amplitude ration 0.68 minus a constant h₀ which is set to 0.2, it satisfies the amplitude threshold test as represented by step **802.**

Next, the mean of the previous 5 cycles on Y-axis is 15.6, whereas the mean of the previous 5 valid cycles on the Z-axis is also 15.6. Thus, the cycle test (step **804**) also satisfies. Next, the absolute values of the cycle differences on Y-axis are computed and they are 0.4, 0.4, 1.6, 0.4 and 0.4. The absolute values of the valid cycle differences on the Z-axis are 0.6, 0.6, 1.6, 1.4 and 1.4. The sum of the absolute difference is 3.2 for Y-axis and 5.6 for the valid axis. Hence, the rhythm on Y-axis is better than that on the Z-axis. Therefore, the current step is one valid step and the valid axis is switch to Y-axis. Thus the Y-axis replaces the Z-axis as the optimal axis.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

For example, the number of consecutive steps used in the Counting-I procedure **600** is set to sixteen as described in the aforementioned embodiment. But one skilled in the art should understand that other value can also be applied as long as it is long enough to ensure a repetitive movement of the user.

While a method of identifying optimal axis is disclosed in previous embodiments. Other methods may be used. As an example, when the current axis is changed, the software may look for the past three consecutive steps. In this method, the thresholds comparators are the same of the previous optimal axis. Only when the last two steps are on the same axis and they are different from the first step, the current axis will be considered to be an optimal axis. If the second step and the third step is not the same, i.e., the three steps have three different axes, the software will continue to monitor the fourth step and repeat the algorithm. Measuring three steps for valid step count ensures that the user's irregular movement will not interfere with the counting of the repetition counter, e.g. if the valid axes of the last two steps are not the same and at least one of them is different from that of the first step.

While a pedometer is used as an exemplary embodiment to disclose the inventive ideas, the same apparatus can be use to count repetitive events of an exerciser as mentioned previously. For example, the apparatus can be worn by a swimmer to count the number of strokes during swimming. It can further be enhanced to detect a major change of the acceleration profile in swimming which corresponds to the turning around from the end of the swimming pool. Thus the same apparatus can count the number of laps that swimmer has attended as well. Likewise, those skilled in the art can also adapt the invention concepts and apply it to count repetitive events in rob-jumping and weight-lifting. In a further embodiment, the apparatus can also be adopted to count non-exercising repetitive events too.

In the exemplary embodiments described above, the apparatus comprises three accelerometers, which measure the accelerations along three orthogonal axes. But it is also possible to have more than three accelerometers even if they are not measuring the accelerations along orthogonal axes in the space.

Although a portable device is used as an exemplary device in this disclosure, the inventive ideas can be realized in a plurality of ways and need not be confined to a portable form factors. In other embodiments, the inventive ideas can be implemented as an electronic module of an exercising machine. As an example, it can be incorporated in a track mill or weight-lifting machine to count the repetitions that an exercise makes.

## Claims

1. An apparatus for counting exercise repetitions comprising three accelerometers simultaneously measuring the acceleration data to obtain acceleration profiles of an exerciser along three axes;
a data processing unit comprising an algorithm, said data processing unit executing said algorithm to add to a repetition count when at least one of said acceleration profiles falls within thresholds; and a display connected to said data processing unit and a memory connected to said data processing unit; each said acceleration profile further comprising an amplitude movement and an acceleration cycle, **characterized in that**:
the data processing unit identifies an optimal axis, of said three axes, for counting exercise repetitions, said optimal axis being the axis where said acceleration profile satisfies a second amplitude threshold, a cycle threshold and a rhythm threshold;
wherein said apparatus counts said exercise repetitions of said exerciser using said optimal axis, irrespective of an orientation of said apparatus.

2. The apparatus of claim 1, wherein each of said three accelerometers measure acceleration along one of the three orthogonal axes in three dimensional spaces.

3. The apparatus of claim 1, wherein said acceleration profiles comprise repetitive waveforms.

4. The apparatus of claim 1, wherein said acceleration profiles comprise an amplitude movement and an acceleration cycle, and said repetition count is incremented when said amplitude movement falls within an amplitude threshold and said acceleration cycle falls within a cycle threshold.

5. The apparatus of claim 4, wherein said repetition count is incremented by two when said amplitude movement falls within said amplitude threshold and said acceleration cycle is longer than one cycle threshold but shorter than twice of said cycle threshold.

6. The apparatus of claim 1, wherein a first valid repetition along a first axis is detected by said data processing unit when said amplitude movement of said acceleration profile satisfies a first cycle threshold range first before other axes.

7. The apparatus of claim 6, wherein a first amplitude indicator, a first cycle indicator and a first rhythm indicator from said first axis, and a second amplitude threshold, a second cycle threshold range and a rhythm threshold range from said previous optimal axis is computed by using said data processing unit if said first axis is different from the previous optimal axis.

8. The apparatus of claim 7, wherein said first axis is identified as a new optimal axis when said first amplitude indicator satisfies said second amplitude threshold; said first cycle indicator is within said second cycle threshold range and said first rhythm indicator is within said rhythm threshold range.

9. A method of counting exercise repetitions comprising simultaneously measuring the acceleration data to obtain acceleration profiles of an exerciser along at least three axes by at least three accelerometers, comparing said acceleration profiles on each axis with thresholds and adding to a repetition count when at least one of said acceleration profiles falls within at least one of said thresholds, **characterized in that**:
identifying an optimal axis for comparison in said comparing step, said optimal axis being the axis satisfies a second amplitude threshold, a cycle threshold and a rhythm threshold.

10. The method of claim 9, wherein said acceleration profiles comprise repetitive waveform and said thresholds are computed from a previously stored waveform.

11. The method of claim 9, wherein said acceleration profile comprises amplitude movement and acceleration cycle and said adding step increments said repetition count when said amplitude movement falls within an amplitude threshold and said acceleration cycle falls within a cycle threshold.

12. The method of claim 11, wherein said repetition count is incremented by two when said amplitude movement falls within said amplitude threshold and said acceleration cycle is longer than one cycle threshold but shorter than twice of said cycle threshold.

13. A method of identifying a new optimal axis for counting exercise repetitions comprising simultaneously measuring the acceleration data to obtain an acceleration profile of an exerciser along at least three axes by at least three accelerometers, each said acceleration profile further comprising an amplitude movement and an acceleration cycle along said axes, **characterized in that**:
a) detecting a first valid repetition along a first axis by a data processing unit when said amplitude movement of said acceleration profile on said first axis satisfies a first amplitude threshold range and said acceleration cycle of said same acceleration profile satisfies a first cycle threshold range first before other axes;
b) if said first axis is different from said previous optimal axis, computing a first amplitude indicator, a first cycle indicator and a first rhythm indicator from said first axis, and a second amplitude threshold, a second cycle threshold range and a rhythm threshold range from said previous optimal axis using said data processing unit;
c) identifying said first axis as said new optimal axis when said first amplitude indicator satisfies said second amplitude threshold; said first cycle indicator is within said second cycle threshold range and said first rhythm indicator is within said rhythm threshold range.

14. The method of Claim 13, wherein said first amplitude indicator is calculated from the ratios of amplitudes and cycles of a predetermined number of previous steps on said first axis; said second amplitude threshold is calculated from the ratios of amplitudes and cycles of a predetermined number of previous steps on said second; said first cycle indicator is calculated from the cycles of said predetermined number of previous steps on said first axis; and said second cycle threshold range is calculated from the cycles of said predetermined number of previous steps on said second axis.

15. The method of Claim 13, wherein said first rhythm indicator is calculated from the mean of absolute differences between cycles of said predetermined number of previous steps and the mean value thereof on said first axis; and said rhythm threshold range is calculated from the mean of absolute differences between cycles of said predetermined number of previous steps and the mean value thereof on said second axis.

## Patentansprüche

1. Vorrichtung zum Zählen von Wiederholungen von Übungen, umfassend drei Beschleunigungsmesser, die gleichzeitig die Beschleunigungsdaten messen, um Beschleunigungsprofile eines Trainingsgeräts entlang dreier Achsen zu erlangen; eine Datenverarbeitungseinheit, die einen Algorithmus umfasst, wobei die Datenverarbeitungseinheit den Algorithmus ausführt, um eine Wiederholungszahl hochzuzählen, wenn mindestens eines dieser Beschleunigungsprofile innerhalb von Schwellenwerten fällt; und ein Display, das mit der Datenverarbeitungseinheit verbunden ist, und einen Speicher, der mit der Datenverarbeitungseinheit verbunden ist; wobei jedes der Beschleunigungsprofile weiter eine Amplitudenbewegung und einen Beschleunigungszyklus umfasst, **dadurch gekennzeichnet, dass**:
die Datenverarbeitungseinheit eine optimale Achse der drei Achsen identifiziert, um Wiederholung von Übungen zu zählen, wobei die optimale Achse die Achse ist, bei der das Beschleunigungsprofil einen zweiten Amplitudenschwellenwert, einen Zyklusschwellenwert und einen Rhythmusschwellenwert erfüllt;
wobei die Vorrichtung die Wiederholung von Übungen des Trainingsgeräts unter Verwendung der optimalen Achse ungeachtet einer Ausrichtung der Vorrichtung zählt.

2. Vorrichtung nach Anspruch 1, wobei jeder der drei Beschleunigungsmesser die Beschleunigung entlang einer der drei orthogonalen Achsen in dreidimensionalen Räumen misst.

3. Vorrichtung nach Anspruch 1, wobei die Beschleunigungsprofile repetitive Wellenformen umfassen.

4. Vorrichtung nach Anspruch 1, wobei die Beschleunigungsprofile eine Amplitudenbewegung und einen Beschleunigungszyklus umfassen und die Wiederholungszahl inkrementiert wird, wenn die Amplitudenbewegung in einen Amplitudenschwellenwert fällt und der Beschleunigungszyklus in einen Zyklusschwellenwert fällt.

5. Vorrichtung nach Anspruch 4, wobei die Wiederholungszahl um zwei erhöht wird, wenn die Amplitudenbewegung in den Amplitudenschwellenwert fällt und der Beschleunigungszyklus länger ist als ein Zyklusschwellenwert, aber kürzer als das Zweifache des Zyklusschwellenwerts.

6. Vorrichtung nach Anspruch 1, wobei eine erste gültige Wiederholung entlang einer ersten Achse von der Datenverarbeitungseinheit detektiert wird, wenn die Amplitudenbewegung des Beschleunigungsprofils einen ersten Zyklusschwellenwertbereich erfüllt, zuerst vor anderen Achsen.

7. Vorrichtung nach Anspruch 6, wobei ein erster Amplitudenindikator, ein erster Zyklusindikator und ein erster Rhythmusindikator von der ersten Achse und ein zweiter Amplitudenschwellenwert, ein zweiter Zyklusschwellenwertbereich und ein Rhythmusschwellenwertbereich von der vorhergehenden optimalen Achse durch Verwenden der Datenverarbeitungseinheit berechnet werden, wenn sich die erste Achse von der vorhergehenden optimalen Achse unterscheidet.

8. Vorrichtung nach Anspruch 7, wobei die erste Achse als eine neue optimale Achse identifiziert wird, wenn der erste Amplitudenindikator den zweiten Amplitudenschwellenwert erfüllt; wobei der erste Zyklusindikator innerhalb des zweiten Zyklusschwellenwertbereichs liegt und der erste Rhythmusindikator innerhalb des Rhythmusschwellenwertbereichs liegt.

9. Verfahren zum Zählen von Wiederholungen von Übungen, umfassend das gleichzeitige Messen der Beschleunigungsdaten, um Beschleunigungsprofile eines Trainingsgeräts entlang von mindestens drei Achsen durch mindestens drei Beschleunigungsmesser zu erlangen, Vergleichen der Beschleunigungsprofile an jeder Achse mit Schwellenwerten und Hochzählen einer Wiederholungszahl, wenn mindestens eines der Beschleunigungsprofile innerhalb von mindestens einem der Schwellenwerte fällt, **dadurch gekennzeichnet, dass**:
beim Identifizieren einer optimalen Achse zum Vergleichen in dem Vergleichsschritt die optimale Achse die Achse ist, die einen zweiten Amplitudenschwellenwert, einen Zyklusschwellenwert und einen Rhythmusschwellenwert erfüllt.

10. Verfahren nach Anspruch 9, wobei die Beschleunigungsprofile eine repetitive Wellenform umfassen und die Schwellenwerte von einer zuvor gespeicherten Wellenform berechnet werden.

11. Verfahren nach Anspruch 9, wobei das Beschleunigungsprofil eine Amplitudenbewegung und einen Beschleunigungszyklus umfasst und der Hinzufügungsschritt die Wiederholungszahl erhöht, wenn die Amplitudenbewegung in einen Amplitudenschwellenwert fällt und der Beschleunigungszyklus in einen Zyklusschwellenwert fällt.

12. Verfahren nach Anspruch 11, wobei die Wiederholungszahl um zwei erhöht wird, wenn die Amplitudenbewegung in den Amplitudenschwellenwert fällt und der Beschleunigungszyklus länger ist als ein Zyklusschwellenwert, aber kürzer als das Zweifache des Zyklusschwellenwerts.

13. Verfahren zum Identifizieren einer neuen optimalen Achse zum Zählen von Übungswiederholungen, umfassend das gleichzeitige Messen der Beschleunigungsdaten, um ein Beschleunigungsprofil eines Trainingsgeräts entlang von mindestens drei Achsen durch mindestens drei Beschleunigungsmesser zu erlangen, wobei jedes der Beschleunigungsprofile weiter eine Amplitudenbewegung und einen Beschleunigungszyklus entlang der Achsen umfasst, **dadurch gekennzeichnet, dass**:
a) eine erste gültige Wiederholung entlang einer ersten Achse durch eine Datenverarbeitungseinheit detektiert wird, wenn die Amplitudenbewegung des Beschleunigungsprofils an der ersten Achse einen ersten Amplitudenschwellenwertbereich erfüllt und der Beschleunigungszyklus des gleichen Beschleunigungsprofils zuerst vor anderen Achsen einen ersten Zyklusschwellenwertbereich erfüllt;
b) wenn sich die erste Achse von der vorhergehenden optimalen Achse unterscheidet, ein erster Amplitudenindikator, ein erster Zyklusindikator und ein erster Rhythmusindikator von der ersten Achse und ein zweiter Amplitudenschwellenwert, ein zweiter Zyklusschwellenwertbereich und ein Rhythmusschwellenwertbereich von der vorhergehenden optimalen Achse unter Verwendung der Datenverarbeitungseinheit berechnet wird;
c) die erste Achse als die neue optimale Achse identifiziert wird, wenn der erste Amplitudenindikator den zweiten Amplitudenschwellenwert erfüllt; der erste Zyklusindikator innerhalb des zweiten Zyklusschwellenwertbereichs liegt und der erste Rhythmusindikator innerhalb des Rhythmusschwellenwertbereichs liegt.

14. Verfahren nach Anspruch 13, wobei der erste Amplitudenindikator aus den Verhältnissen von Amplituden und Zyklen einer vorbestimmten Anzahl an vorherigen Schritten an der ersten Achse berechnet wird; der zweite Amplitudenschwellenwert aus den Verhältnissen von Amplituden und Zyklen einer vorbestimmten Anzahl an vorherigen Schritten an der Zweiten berechnet wird; der erste Zyklusindikator von den Zyklen der vorbestimmten Anzahl an vorherigen Schritten an der ersten Achse berechnet wird; und der zweite Zyklusschwellenwertbereich von den Zyklen der vorbestimmten Anzahl an vorherigen Schritten an der zweiten Achse berechnet.

15. Verfahren nach Anspruch 13, wobei der erste Rhythmusindikator aus dem Mittel der absoluten Differenzen zwischen Zyklen der vorbestimmten Anzahl an vorherigen Schritten und dem Mittelwert davon an der ersten Achse berechnet wird; und der Rhythmusschwellenwertbereich aus dem Mittel der absoluten Differenzen zwischen Zyklen der vorbestimmten Anzahl an vorherigen Schritten und dem Durchschnittswert davon an der zweiten Achse berechnet wird.

## Revendications

1. Appareil destiné à compter des répétitions d'exercice, comportant trois accéléromètres mesurant simultanément des données d'accélération pour obtenir des profils d'accélération d'un pratiquant d'exercice le long de trois axes, une unité de traitement de données comportant un algorithme, ladite unité de traitement de données exécutant ledit algorithme pour additionner un comptage de répétitions lorsqu'au moins un desdits profils d'accélération se situe dans les limites de seuils, et un affichage relié à ladite unité de traitement de données et une mémoire reliée à ladite unité de traitement de données, chaque dit profil d'accélération comportant en outre un mouvement d'amplitude et un cycle d'accélération, **caractérisé en ce que** :
l'unité de traitement de données identifie un axe optimal, parmi lesdits trois axes, pour compter des répétitions d'exercice, ledit axe optimal étant l'axe où ledit profil d'accélération satisfait à un second seuil d'amplitude, à un seuil de cycle et à un seuil de rythme,
dans lequel ledit appareil compte lesdites répétitions d'exercice dudit pratiquant d'exercice en utilisant ledit axe optimal, quelle que soit une orientation dudit appareil.

2. Appareil selon la revendication 1, dans lequel chacun desdits trois accéléromètres mesure une accélération le long de l'un des trois axes orthogonaux dans des espaces tridimensionnels.

3. Appareil selon la revendication 1, dans lequel lesdits profils d'accélération comportent des formes d'onde répétitives.

4. Appareil selon la revendication 1, dans lequel lesdits profils d'accélération comportent un mouvement d'amplitude et un cycle d'accélération, et ledit comptage de répétitions est incrémenté lorsque ledit mouvement d'amplitude se situe dans les limites d'un seuil d'amplitude et que ledit cycle d'accélération se situe dans les limites d'un seuil de cycle.

5. Appareil selon la revendication 4, dans lequel ledit comptage de répétitions est incrémenté de deux lorsque ledit mouvement d'amplitude se situe dans les limites dudit seuil d'amplitude et que ledit cycle d'accélération est plus long qu'un seuil de cycle mais plus court que deux fois ledit seuil de cycle.

6. Appareil selon la revendication 1, dans lequel une première répétition valide le long d'un premier axe est détectée par ladite unité de traitement de données lorsque ledit mouvement d'amplitude dudit profil d'accélération satisfait d'abord à une première plage de seuil de cycle avant d'autres axes.

7. Appareil selon la revendication 6, dans lequel un premier indicateur d'amplitude, un premier indicateur de cycle et un premier indicateur de rythme à partir dudit premier axe, et un second seuil d'amplitude, une seconde plage de seuil de cycle et une plage de seuil de rythme à partir dudit axe optimal précédent sont calculés en utilisant ladite unité de traitement de données si ledit premier axe est différent de l'axe optimal précédent.

8. Appareil selon la revendication 7, dans lequel ledit premier axe est identifié comme un nouvel axe optimal lorsque ledit premier indicateur d'amplitude satisfait audit second seuil d'amplitude, que ledit premier indicateur de cycle est dans les limites de ladite seconde plage de seuil de cycle et que ledit premier indicateur de rythme est dans les limites de ladite plage de seuil de rythme.

9. Procédé de comptage de répétitions d'exercice comportant les étapes consistant à mesurer simultanément des données d'accélération pour obtenir des profils d'accélération d'un pratiquant d'exercice le long d'au moins trois axes par au moins trois accéléromètres, comparer lesdits profils d'accélération sur chaque axe à des seuils et additionner à un comptage de répétitions lorsqu'au moins un desdits profils d'accélération se situe dans les limites d'au moins un desdits seuils, **caractérisé en ce qu'**il comporte l'étape consistant à :
identifier un axe optimal en vue d'une comparaison à ladite étape de comparaison, ledit axe optimal étant l'axe satisfaisant à un second seuil d'amplitude, à un seuil de cycle et à un seuil de rythme.

10. Procédé selon la revendication 9, dans lequel lesdits profils d'accélération comportent une forme d'onde répétitive et lesdits seuils sont calculés à partir d'une forme d'onde précédemment mémorisée.

11. Procédé selon la revendication 9, dans lequel ledit profil d'accélération comporte un mouvement d'amplitude et un cycle d'accélération et ladite étape d'addition incrémente ledit comptage de répétitions lorsque ledit mouvement d'amplitude se situe dans les limites d'un seuil d'amplitude et que ledit cycle d'accélération se situe dans les limites d'un seuil de cycle.

12. Procédé selon la revendication 11, dans lequel ledit comptage de répétitions est incrémenté de deux lorsque ledit mouvement d'amplitude se situe dans les limites dudit seuil d'amplitude et que ledit cycle d'accélération est plus long qu'un seuil de cycle mais plus court que deux fois ledit seuil de cycle.

13. Procédé d'identification d'un nouvel axe optimal pour compter des répétitions d'exercice, comportant l'étape consistant à mesurer simultanément les données d'accélération pour obtenir un profil d'accélération d'un pratiquant d'exercice le long d'au moins trois axes par au moins trois accéléromètres, chaque dit profil d'accélération comportant en outre un mouvement d'amplitude et un cycle d'accélération le long desdits axes, **caractérisé en ce qu'**il comporte les étapes consistant à :
a) détecter une première répétition valide le long d'un premier axe par une unité de traitement de données lorsque ledit mouvement d'amplitude dudit profil d'accélération sur ledit premier axe satisfait à une première plage de seuil d'amplitude et que ledit cycle d'accélération dudit même profil d'accélération satisfait d'abord à une première plage de seuil de cycle avant d'autres axes,
b) si ledit premier axe est différent dudit axe optimal précédent, calculer un premier indicateur d'amplitude, un premier indicateur de cycle et un premier indicateur de rythme à partir dudit premier axe, et un second seuil d'amplitude, une seconde plage de seuil de cycle et une plage de seuil de rythme à partir dudit axe optimal précédent en utilisant ladite unité de traitement de données,
c) identifier ledit premier axe en tant que dit nouvel axe optimal lorsque ledit premier indicateur d'amplitude satisfait audit second seuil d'amplitude, que ledit premier indicateur de cycle est dans les limites de ladite seconde plage de seuil de cycle et que ledit premier indicateur de rythme est dans les limites de ladite plage de seuil de rythme.

14. Procédé selon la revendication 13, dans lequel ledit premier indicateur d'amplitude est calculé à partir des rapports d'amplitudes et de cycles d'un nombre prédéterminé d'étapes précédentes sur ledit premier axe, ledit second seuil d'amplitude est calculé à partir des rapports d'amplitudes et de cycles d'un nombre prédéterminé d'étapes précédentes sur ledit second axe, ledit premier indicateur de cycle est calculé à partir des cycles dudit nombre prédéterminé d'étapes précédentes sur ledit premier axe, et ladite seconde plage de seuil de cycle est calculée à partir des cycles dudit nombre prédéterminé d'étapes précédentes sur ledit second axe.

15. Procédé selon la revendication 13, dans lequel ledit premier indicateur de rythme est calculé à partir de la moyenne des différences absolues entre des cycles dudit nombre prédéterminé d'étapes précédentes et la valeur moyenne de celles-ci sur ledit premier axe, ladite plage de seuil de rythme est calculée à partir de la moyenne des différences absolues entre des cycles dudit nombre prédéterminé d'étapes précédentes et la valeur moyenne de celles-ci sur ledit second axe.
